# EUROPEAN PATENT SPECIFICATION

(11) **EP 3 318 457 B1**
(45) Date of publication and mention of the grant of the patent: **22.09.2021**
(21) Application number: 16817559.4
(22) Date of filing: 10.05.2016
(51) Int. Cl.: B60T 8/17, B60T 13/74, B60T 17/18

(54) **ELECTROMECHANICAL BRAKE DEVICE**
ELEKTROMECHANISCHE BREMSVORRICHTUNG
DISPOSITIF DE FREIN ÉLECTROMÉCANIQUE

(30) Priority: 02.07.2015 JP 2015133444
(43) Date of publication of application: 09.05.2018
(73) Proprietor: Mitsubishi Jidosha Kogyo Kabushiki Kaisha, Tokyo 108-8410 (JP)
(72) Inventor: KOTERA, Haruo, Tokyo 108-8410 (JP); TOYOTA, Hiromitsu, Tokyo 108-8410 (JP)
(74) Representative: Vossius & Partner Patentanwälte Rechtsanwälte mbB
(86) International application number: PCT/JP2016/063798
(87) International publication number: WO 2017/002450

(56) References cited:
- EP-A1- 1 787 882
- JP-A- 2001 138 882
- JP-A- 2006 035 967
- JP-A- 2008 069 969
- JP-A- 2010 195 122
- JP-A- 2014 134 215
- KR-A- 20040 034 999
- US-A1- 2010 147 633
- US-B2- 9 022 488

## Description

### TECHNICAL FIELD

This invention relates to an electric brake device having a friction-receiving member that rotates together with a wheel; and a friction-applying member that moves while being powered by an electric actuator, and obtains the braking force by pressing the friction-applying member against the friction-receiving member.

### BACKGROUND ART

In recent years, as an alternative for the conventional hydraulic brake, there has been developed an electric brake device designed to obtain braking force by pressing a friction-applying member, such as brake pad, against a friction-receiving member such as brake disk, with the aid of an electric actuator.

The brake device is a critical mechanism of vehicles, and employs a redundant system by which the vehicles can safely stop even in case of brake failure.

For example, Patent Literature 1 below discloses an electrically controlled brake system that includes a brake for limiting rotation of wheels, a power unit, and a brake control unit for controlling the operational state of the brake by controlling electric energy supplied from the power unit; the brake system further includes, disposed between the power source and the brake control unit, a switching device that performs switching from a connected state to a disconnected state in association with braking operation of a brake operating member; the brake control unit includes a switchover unit that toggles between a coupled mode in which the operation of a mechanical brake that operates in association with motion of a brake operating member is coupled to the brake operating member, and a decoupled mode in which the operation is decoupled from the brake operating member, and a switchover unit control unit that performs, in case of failure of the electrically controlled brake system, switching from the decoupled mode to the coupled mode. Patent Literature 2 relates to an exemplary electro-mechanical brake system which can keep a stop state even if a malfunction is generated in a parking brake.

### CITATION LIST

### PATENT LITERATURE

Patent Literature 1: JP-A-2000-225935
Patent Literature 2: EP 1787882 A1

### SUMMARY OF THE INVENTION

### TECHNICAL PROBLEM

The above-described prior art is designed to obtain braking force, in case of failure of the electrically controlled brake system, by activating the mechanical brake. There is however a need for providing the mechanical brake in addition to an electrically controlled brake system, posing an issue of increasing the vehicle cost.

In addition, the above-described prior art has described that four control units are provided for four wheel braking mechanisms, but has not described a system that can control four wheel braking mechanisms with three or less control units, leaving a room for further improvement.

This invention, made in consideration of the above-described circumstances, is to improve convenience of the electric brake device.

### SOLUTION TO PROBLEM

In pursuit of achieving the above-described object, the invention as defined in the independent claim 1 has been made while the dependent claims are directed to preferred embodiments.

### ADVANTAGEOUS EFFECTS OF INVENTION

According to the invention, four brake mechanism can be controlled by three control units, posing an advantage of reducing the quantity of parts for the electric brake device, and reducing the vehicle cost.

According to a preferred embodiment, in case of malfunction and braking failure at any one wheel, the braking force is reduced for a wheel positioned opposite to the defective wheel both in the width direction and the length direction, that is, both in the front-rear direction and the crosswise direction, posing an advantage of balancing the braking force in the vehicle-width direction.

According to a preferred embodiment, in case of braking malfunction at any two or more wheels, the braking force is controlled so as to be balanced between braking forces of the wheels composing the individual wheel pairs, posing an advantage of balancing the braking force in the vehicle-width direction, and stabilizing the vehicle posture during braking.

According to a preferred embodiment, when either the first control unit or the second control unit went into failure to disable braking, the braking force of the brake mechanism positioned opposite to the defective control unit both in the width direction and in the length direction is reduced; the braking force of the brake mechanism positioned on the same side in the width direction and on the opposite side in the length direction with respect to the defective control unit is increased; and the braking force of the brake mechanism positioned on the opposite side in the width direction and on the same side in the length direction with respect to the defective control unit is increased, posing an advantage of balancing the braking force in the vehicle-width direction, and stabilizing the vehicle posture during braking.

According to a preferred embodiment, in case of failure of the third control unit, the braking forces of the first control unit and the second control unit are individually increased, posing an advantage of achieving a braking force nearly equal to that before the failure, while balancing the braking force in the vehicle-width direction.

According to the invention, in case of failure of the third control unit, the parking brake mechanism is activated to produce the braking force for the third wheel and the fourth wheel, posing an advantage of obtaining a higher level of braking force.

According to a preferred embodiment, in case of failure of the first control unit and the second control unit, the braking forces of the third brake mechanism and the fourth brake mechanism are individually increased, posing an advantage of achieving a braking force nearly equal to that before the failure, while balancing the braking force in the vehicle-width direction.

According to the invention, in case of failure of either the first control unit or the second control unit, and also of the third control unit, the braking force of the brake mechanism positioned on the opposite side in the width direction and on the same side in the length direction with respect to the defective control unit is reduced; and the parking brake mechanism generates the braking force for the third wheel and the fourth wheel, posing an advantage of balancing the braking force in the vehicle-width direction, and stabilizing the vehicle posture during braking.

According to a preferred embodiment, each of the brake mechanisms obtains the braking force by pressing, with the aid of the actuator, the friction-applying member against the friction-receiving member that rotates together with the wheel, posing an advantage of improving responsiveness to the brake operation as compared with the conventional hydraulic brake, and enabling various modes of brake operation adopted to the vehicle conditions.

According to a preferred embodiment, a disk brake system with a high heat radiation performance is built by employing a brake disk as the friction-receiving member, and a brake pad as the friction-applying member, posing an advantage of improving durability of the brake mechanism.

According to a preferred embodiment, the third brake mechanism and the fourth brake mechanism also function as the parking brake mechanism, posing an advantage of reducing vehicle weight and simplifying vehicle configuration, as compared with the case where a dedicated parking brake mechanism is provided.

According to a preferred embodiment, the parking brake mechanism is composed by providing a drum brake system at the center of the brake disk, posing an advantage of relieving the load of the individual brake mechanisms, as compared with the case where the third brake mechanism and the fourth brake mechanism also function as the parking brake mechanism.

According to a preferred embodiment, the parking brake mechanism is configured by providing an additional brake system for the parking brake at the center of the brake disk, posing an advantage of relieving the load of the individual brake mechanisms, as compared with the case where the third brake mechanism and the fourth brake mechanism also function as the parking brake mechanism.

According to a preferred embodiment, there are provided two batteries for supplying power to each brake mechanism, making it possible to allow a sub-battery to activate the brake mechanism even in case of failure of the main battery, posing an advantage of improving redundancy of the brake mechanism.

According to a preferred embodiment, the control units are provided one by one to the front-left wheel brake mechanism and the front-right wheel brake mechanism, and a single control unit is allocated to the left and right brake mechanisms for rear wheels, so that even if one control unit should go into failure, the residual brake mechanism for the front wheels remains controllable, posing an advantage of enhancing redundancy of the front wheel brake having a higher importance in braking.

### BRIEF DESCRIPTION OF DRAWINGS

[FIG. 1] FIG. 1 is an explanatory drawing illustrating a configuration of an electric brake device 10 according to an embodiment.
[FIG. 2] FIG. 2 is an explanatory drawing illustrating an exemplary configuration of a parking brake in the electric brake device 10.
[FIG. 3] FIG. 3 is an explanatory drawing illustrating an exemplary schematic configuration of a control unit.
[FIG. 4] FIG. 4 is an explanatory drawing illustrating changes in braking force in case of control unit failure.
[FIG. 5] FIG. 5 is an explanatory drawing illustrating changes in braking force in case of control unit failure.
[FIG. 6] FIG. 6 is an explanatory drawing illustrating changes in braking force in case of control unit failure.
[FIG. 7] FIG. 7 is an explanatory drawing illustrating changes in braking force in case of control unit failure.

### DESCRIPTION OF EMBODIMENTS

Preferred embodiments of the electric brake device of this invention will be detailed below, referring to the attached drawings.

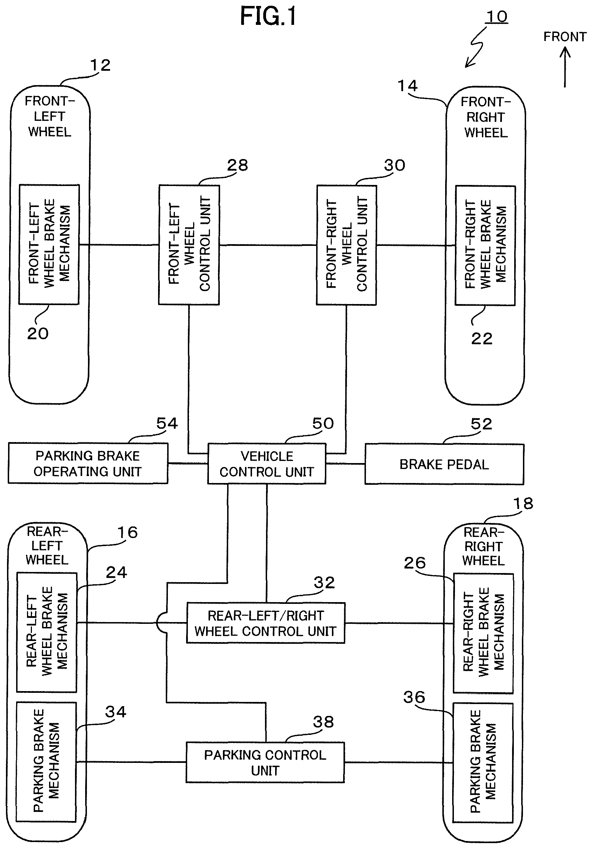

FIG. 1 is an explanatory drawing illustrating a configuration of an electric brake device 10 according to an embodiment.

The electric brake device 10 is configured to contain front, rear, left and right wheels 12, 14, 16, 18; brake mechanisms 20, 22, 24, 26, 34, 36 respectively provided to the wheels; control units 28, 30, 32, 38, 50; and operating units 52, 54.

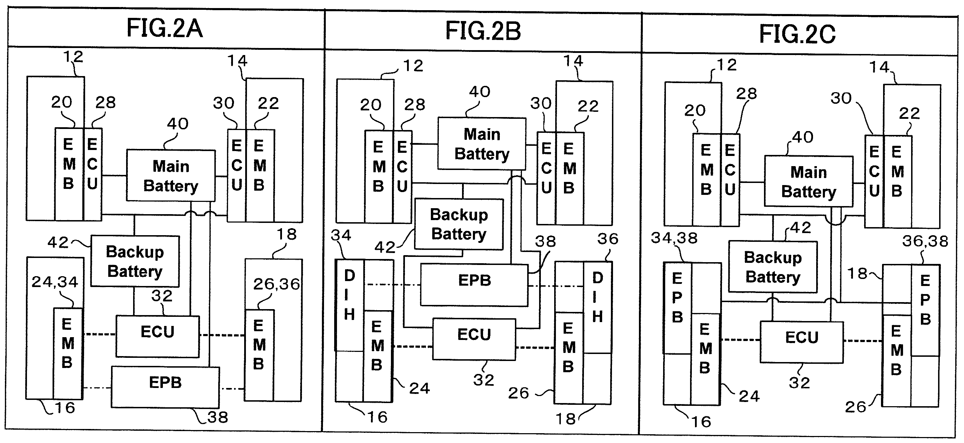

Note that, in addition to the configuration illustrated in FIG. 1, the electric brake device 10 also has a main battery 40 and a backup battery 42 (see FIG. 2), but not shown in FIG. 1.

In more detail, the wheels 12, 14, 16, 18 are the front-left wheel 12, the front-right wheel 14, the rear-left wheel 16, and the rear-right wheel 18. There are provided the front-left wheel brake mechanism 20 to the front-left wheel 12; the front-right wheel brake mechanism 22 to the front-right wheel 14; the rear-left wheel brake mechanism 24 to the rear-left wheel 16; and the rear-right wheel brake mechanism 26 to the rear-right wheel 18, respectively, making it possible to brake the respective wheels.

The individual brake mechanisms 20, 22, 24, 26 configure service brakes, and are respectively provided with control units 28, 30, 32.

Among them, the front-left wheel brake mechanism 20 is controlled by the front-left wheel control unit 28, the front-right wheel brake mechanism 22 by the front-right wheel control unit 30, and the rear-left wheel brake mechanism 24 and the rear-right wheel brake mechanism 26 by the rear-left/right wheel control unit 32, respectively.

The parking control unit 38 controls the parking brake mechanisms 34, 36.

The individual control units 28, 30, 32, 38 are connected to the vehicle control unit 50 that takes part in main control of the vehicle.

The vehicle control unit 50 is connected to a brake pedal (service brake operating unit) 52 and a parking brake operating unit 54, and outputs, when the brake pedal 52 or the parking brake operating unit 54 is operated, a control signal that directs the individual control units 28, 30, 32, 38 to activate the brake.

The vehicle control unit 50 also monitors the operating status of the individual control units 28, 30, 32, 38, and outputs, when any of the control units 28, 30, 32, 38 should go into failure, a control signal that notifies other control units of the failure.

Note that, in place of notifying the failure of the control units 28, 30, 32, 38 by way of the vehicle control unit 50, the individual control units 28, 30, 32, 38 may be connected directly so as to allow them to monitor each other.

Each of the brake mechanisms 20, 22, 24, 26 is an electric brake mechanism (electro-mechanical brake: EMB) that has a friction-receiving member that rotates together with a wheel, and a friction-applying member that moves while being powered by an electric actuator, and obtains the braking force by pressing the friction-applying member against the friction-receiving member.

In more detail, each of the brake mechanisms 20, 22, 24, 26 has a brake disk (friction-receiving member) that rotates together with the wheel, and an electric caliper that has a brake pad movable between the pressing position and the non-pressing position relative to the brake disk by aid of the electric actuator.

In the normal state (non-braking state), the brake pad is positioned at the non-pressing position away from the brake disk. When braking, the control units 28, 30, 32 activate the electric actuator to move the brake pad to the pressing position where the pad comes into contact with the brake disk, thereby kinetic energy of the wheels is converted into thermal energy, and the vehicle is slowed down to a desired speed.

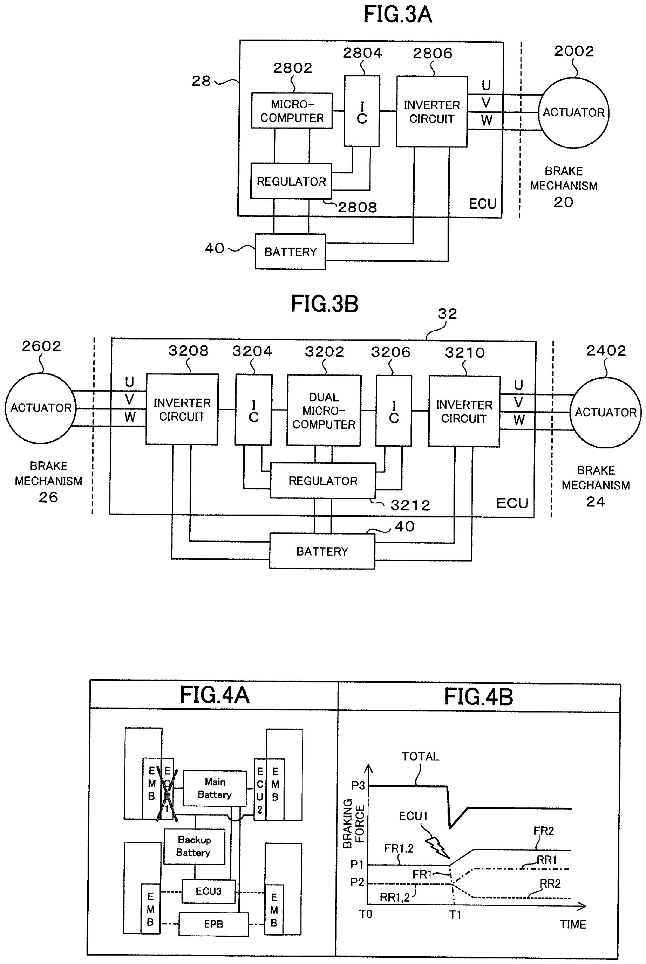

FIG. 3 is an explanatory drawing illustrating an exemplary schematic configuration of the control unit, wherein FIG. 3A illustrates the control unit that controls one brake mechanism, such as the front-left wheel control unit 28 (or the front-right wheel control unit 30), and FIG. 3B illustrates the control unit that controls two brake mechanisms, such as the rear-left/right wheel control unit 32.

As illustrated in FIG. 3A, the front-left wheel control unit 28 is configured to contain a microcomputer 2802, an integrated circuit (IC) 2804, and a bridge (inverter) circuit 2806. A power source regulator 2808 and the bridge circuit 2806 are connected to a main battery 40.

The microcomputer 2802 is connected to the vehicle control unit 50 (not illustrated in FIG. 3), and, when a brake activation instruction is issued from the vehicle control unit 50, activates the bridge circuit 2806 to convert electric power of the main battery 40 into three-phase AC power, and supplies the power to the electric actuator 2002 of the brake mechanism (the front-left wheel brake mechanism 20 in FIG. 3A) to thereby activate the electric actuator 2002. In short, the front-left wheel control unit 28 contains a power source circuit of the front-left wheel brake mechanism 20.

As illustrated in FIG. 3B, the rear-left/right wheel control unit 32 is configured to contain a dual microcomputer 3202, two integrated circuits 3204, 3206, two bridge circuits 3208, 3210, and a power source regulator 3212. A power source regulator 3212 and the bridge circuits 3208, 3210 are individually connected to the main battery 40.

The dual microcomputer 3202 is connected to the vehicle control unit 50, and, when a brake activation instruction was issued from the vehicle control unit 50, activates the bridge circuits 3208, 3210 to convert electric power of the main battery 40 into three-phase AC power, and supplies the power to the electric actuators 2402, 2602 of the brake mechanism (the rear-left wheel brake mechanism 24 and the rear-right wheel brake mechanism 26 in FIG. 3B) to thereby activate the electric actuators 2402, 2602.

Since operations of the bridge circuits 3208, 3210 are controllable independently, so that the individual electric actuators 2402, 2602 (rear-left wheel brake mechanism 24 and rear-right wheel brake mechanism 26) may be put into operation independently.

Since the electric brake mechanism controls operations of the brake mechanism by electric signals, so that the operations of the brake mechanism may be controlled finely depending on situations, thus making it no more necessary to use hydraulic piping, and making it possible to considerably reduce the vehicle weight.

As illustrated in FIG. 2, the individual brake mechanisms 20, 22, 24, 26 in this embodiment are connected to the main battery 40 and the backup battery 42, allowing that if the main battery 40 should go into failure, the supply source of power towards the individual brake mechanisms 20, 22, 24, 26 is switched to the backup battery 42. This improves availability of the brake mechanisms 20, 22, 24, 26.

Referring now back to FIG. 1, the rear-left wheel 16 and the rear-right wheel 18 are further provided with the parking brake mechanisms 34, 36, respectively. The parking brake mechanisms 34, 36 are mainly used for preventing parked vehicles from moving.

The parking brake mechanisms 34, 36 are controlled by the parking control unit 38.

In this embodiment, each of the parking brake mechanisms 34, 36 is an electric parking brake (EPB), and may be configured in various ways.

FIG. 2 is an explanatory drawing illustrating an exemplary configuration of the parking brake in the electric brake device 10.

In FIG. 2, EMB 20 corresponds to the front-left wheel brake mechanism 20, EMB 22 to the front-right wheel brake mechanism 22, EMB 24 to the rear-left wheel brake mechanism 24, and EMB 26 to the rear-right wheel brake mechanism 26.

ECU 28 corresponds to the front-left wheel control unit 28, ECU 30 to the front-right wheel control unit 30, and ECU 32 to the rear-left/right wheel control unit 32.

EPB 38 corresponds to the parking control unit 38.

In the design illustrated in FIG. 2A, the rear-left wheel brake mechanism 24 and the rear-right wheel brake mechanism 26 also function as the parking brake mechanisms 34, 36, respectively.

More specifically, when using the parking brake, the parking control unit 38 activates the electric actuators of the rear-left wheel brake mechanism 24 and the rear-right wheel brake mechanism 26, the brake pads then move to the pressing position relative to the brake disk, to thereby apply braking force to the rear-left/right wheels 16, 18.

With such configuration, a brake mechanism solely for parking is no more necessary, and the vehicle weight may be reduced.

FIG. 2B illustrates an exemplary configuration of the parking brake mechanisms 34, 36 based on the drum-in-hat (DIH) system, in which a brake drum is disposed in the brake disk of the rear-left wheel brake mechanism 24 and the rear-right wheel brake mechanism 26.

More specifically, the parking brake mechanisms 34, 36 have brake drums respectively disposed in the hats positioned at the center of the brake disks of the rear-left wheel brake mechanism 24 and the rear-right wheel brake mechanism 26, and rotate together with the wheels; and brake shoes provided inside the individual brake drums, and movable between the pressing position and the non-pressing position relative to the brake drums while being powered by the electric actuators for parking.

In the normal state (non-braking state for parking), each brake shoe is energized by a spring towards the inner circumference of the brake drum, and is kept at the non-pressing position away from the brake drum. To the brake shoe, there is also attached a brake shoe lever whose one end is attached to the brake shoe in a swingable manner, and whose other end has a wire attached thereto.

When the wire is pulled (wound) by the electric actuator for parking, the brake shoe lever swings, the brake shoe moves towards the outer circumference of the brake drum against the energizing force of the spring, and positions itself at the pressing position relative to the brake drum.

As described above, when operating the parking brake, the parking control unit 38 activates the electric actuator for parking, moves the brake shoes of the parking brake mechanisms 34, 36 to the pressing position relative to the brake drum, to thereby apply the braking force to the rear-left/right wheels 16, 18.

FIG. 2C illustrates an exemplary configuration of the brake drum-type electric parking brake mechanisms 34, 36, 38 built in the brake disks of the rear-left wheel brake mechanism 24 and the rear-right wheel brake mechanism 26.

More specifically, the parking brake mechanisms 34, 36 have the brake drums that are positioned at the center of the brake disks of the rear-left wheel brake mechanism 24 and the rear-right wheel brake mechanism 26, and rotate together with the wheels; and the brake shoes provided inside the individual brake drums, and movable between the pressing position and the non-pressing position relative to the brake drums while being powered by the electric actuator for parking. The parking control unit 38 is configured integrally with each of the parking brake mechanisms 34, 36.

In the normal state (non-braking state for parking), the brake shoe is energized towards the inner circumference of the brake drum, and is kept at the non-pressing position away from the brake drum. Between one end of the brake shoe and one end of the brake shoe, a motor with a linear motion mechanism is attached.

When the motor of the drum-type parking rotates, the brake shoe is pushed on one end while mediated by a linear motion mechanism. When the brake shoe is pressed, it moves towards the outer circumference of the brake drum, and comes into the pressing position relative to the brake drum.

In this way, when operating the parking brake, the parking control unit 38 activates the electric actuator for parking so as to move the brake shoes of the parking brake mechanisms 34, 36 to the pressing position relative to the brake drum, thereby the braking force is applied to the rear-left/right wheels 16, 18.

Next, a control process in case of failure of the electric brake device 10 will be explained.

In general, if three out of the four wheels 12, 14, 16, 18 become unbrakable (only one wheel remains brakable), the braking operation may off-balance the vehicle, and may tend to turn it to an unintentional direction.

The electric brake device 10 uses three control units 28, 30, 32 to control four brake mechanisms 20, 22, 24, 26 provided to four wheels 12, 14, 16, 18, and in case of failure of two of these control units, three wheels will become uncontrollable, and thereby the vehicle may be off-balanced.

For this reason, in case of braking malfunction of any of the front-left wheel, the front-right wheel, the rear-left wheel and the rear-right wheel, and even in case of failure of any one of, or two control units out of the three control units 28, 30, 32, the electric brake device 10 is designed to leave at least two wheels brakable, so as to keep the steering performance of the vehicle, and so as to reserve a level of braking force necessary to stop the vehicle.

Note that, in this embodiment, failure of the control units 28, 30, 32 means the state that they cannot activate the brake mechanisms 20, 22, 24, 26, and is exemplified by failure of the power source circuit, and signal wire breakage.

Besides those described above, also failure of the brake mechanisms 20, 22, 24, 26, such as failure of the electric actuator and wear of the brake pad, may result in malfunction in wheel braking. Control policies described below will be adoptable for these cases.

FIG. 4 to FIG. 7 are explanatory drawings illustrating changes in the braking force in case of failure of the control unit.

Note that, in FIG. 4 to FIG. 7, ECU1 corresponds to the front-left wheel control unit 28, ECU2 to the front-right wheel control unit 30, ECU3 to the rear-left/right wheel control unit 32, and EPB to the parking control unit 38, respectively. FR1 corresponds to the front-left wheel brake mechanism 20, FR2 to the front-right wheel brake mechanism 22, RR1 to the rear-left wheel brake mechanism 24, and RR2 to the rear-right wheel brake mechanism 26, respectively.

In the description below, the phrase stating that "the control unit increases (or reduces) the braking force of the brake mechanism" discusses, for example, the magnitude of control exerted from the subject control unit to the brake mechanism, and does not always identify the braking force of the brake mechanism as a whole.

More specifically, for the case where the brake mechanism is controlled by a plurality of control units, even increase in the braking force given by one control unit will not always increase the braking force of the brake mechanism as a whole, typically due to failure of other control units.

First, an exemplary case where one of the control units for front wheels (the front-left wheel control unit 28 in FIG. 4) went into failure, illustrated in FIG. 4A, will be explained.

As illustrated in FIG. 4B, at the initial time T0 when the failure not yet occurred, both of the front-left wheel brake mechanism 20 and the front-right wheel brake mechanism 22 (FR1, 2) brake the front-left/right wheels 12, 14 with predetermined braking force P1; and, both of the rear-left wheel brake mechanism 24 and the rear-right wheel brake mechanism 26 (RR1, 2) brake the rear-left/right wheels 16, 18 with predetermined braking force P2 (<P1), where the braking force totals P3.

If the front-left wheel control unit 28 (ECU1) went into failure at time T1, the front-left wheel brake mechanism 20 (FR1) becomes inoperable, and the braking force of the front-left wheel brake mechanism 20 falls to zero.

In this case, the rear-left/right wheel control unit 32 reduces the braking force of the rear-right wheel brake mechanism 26 (RR2), and increases the braking force of the rear-left wheel brake mechanism 24 (RR1) . The front-right wheel control unit 30 increases the braking force of the front-right wheel brake mechanism 22 (FR2).

In other words, the braking force of the rear-right wheel brake mechanism 26 positioned diagonal to the defective front-left wheel brake mechanism 20 is reduced to stabilize the vehicle posture, and the braking force of the residual brake mechanisms 22, 24 is increased, to thereby reserve a sufficient level of total braking force.

Note that, in case of failure of the front-right wheel control unit 30, it suffices to replace, in the description above, the term "front-left wheel control unit 28" with "front-right wheel control unit 30", and the term "front-left wheel brake mechanism 20" with "front-right wheel brake mechanism 22", respectively.

In other words, when either the front-left wheel control unit 28 or the front-right wheel control unit 30 went into failure, the rear-left/right wheel control unit 32 reduces the braking force of the rear wheel braking mechanism positioned opposite to such one defective control unit in the crosswise direction, and increases the braking force of the rear wheel braking mechanism positioned on the same side with the one defective control unit in the crosswise direction, meanwhile the other one of the front-left wheel control unit 28 and the front-right wheel control unit 30 increases the braking force of the front wheel braking mechanism positioned opposite to the one defective control unit in the crosswise direction.

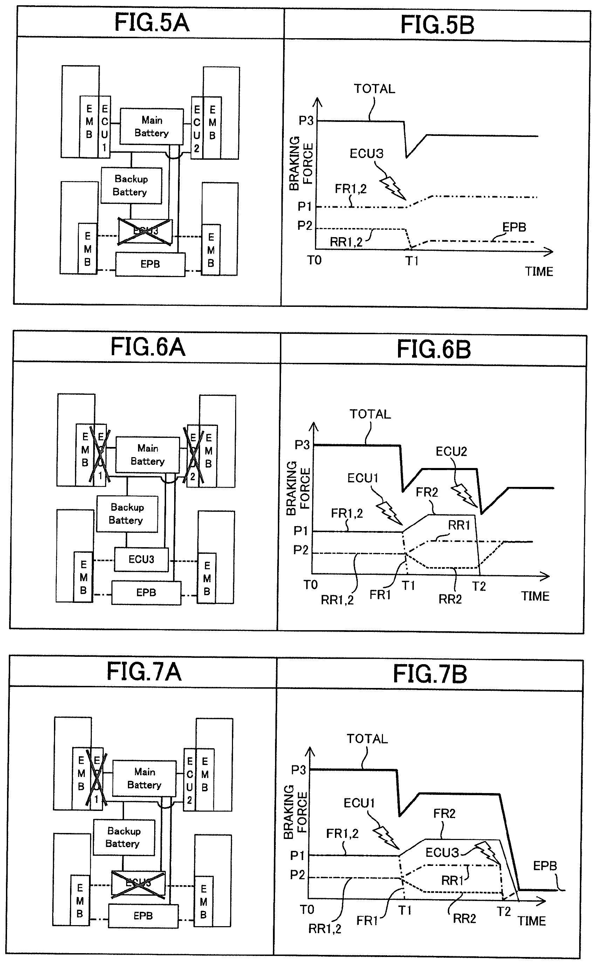

Next, an exemplary case of failure of the rear-left/right wheel control unit 32, illustrated in FIG. 5A, will be explained.

As illustrated in FIG. 5B, at the initial time T0 when the failure not yet occurs, both of the front-left wheel brake mechanism 20 and the front-right wheel brake mechanism 22 (FR1, 2) brake the front-left/right wheels 12, 14 with predetermined braking force P1; and, both of the rear-left wheel brake mechanism 24 and the rear-right wheel brake mechanism 26'(RR1, 2) brake the rear-left/right wheels 16, 18 with predetermined braking force P2 (<P1), where the braking force totals P3.

If the rear-left/right wheel control unit 32 (ECU3) went into failure at time T1, the rear-left wheel brake mechanism 24 (RR1) and the rear-right wheel brake mechanism 26 (RR2) becomes inoperable, and the braking force of the rear wheel braking mechanisms 24, 26 falls to zero.

In this case, the front-left wheel control unit 28 and the front-right wheel control unit 30 increase the braking force of the front-left wheel brake mechanism 20 and the front-right wheel brake mechanism 22 (FR1, 2), respectively. The parking control unit 38 activates the parking brake mechanisms 34, 36 to brake the rear wheels 16, 18.

Although the braking force of the parking brake mechanisms 34, 36 is smaller than those of the rear-left wheel brake mechanism 24 and the rear-right wheel brake mechanism 26 that are service brakes, it can provide a certain level of braking force to the rear wheels 16, 18, and thereby a higher level of braking force may be obtained.

In other words, in case of failure of the rear-left/right wheel control unit 32, the front-left wheel control unit 28 and the front-left wheel control unit 30 increase the braking force of the front-left wheel brake mechanism 20 and the front-right wheel brake mechanism 22, respectively. In case of failure of the rear-left/right wheel control unit 32, the parking control unit 38 activates the parking brake mechanisms 34, 36 to generate the braking force for the rear-left wheel 16 and the rear-right wheel 18.

Note that, in general, the braking force of the front wheel braking mechanism is set larger than that of the rear wheel braking mechanism (ideal braking force distribution) . Therefore, a possible option is to provide braking only by the front-left wheel brake mechanism 20 and the front-right wheel brake mechanism 22, without activating the parking brake mechanisms 34, 36. However, activation of the parking brake mechanisms 34, 36 so as to apply the braking force to the front and rear of the vehicle makes it possible to stabilize the vehicle posture, and to effectively obtain a higher level of braking force.

Next, an exemplary case where both of the front wheel control units (front-left wheel control unit 28 and the front-right wheel control unit 30) successively went into failure, illustrated in FIG. 6A, will be explained.

Referring to FIG. 6B, an exemplary case where the front-left wheel control unit 28 went into failure first, and the front-right wheel control unit 30 went into failure next, will be explained.

As illustrated in FIG. 6B, at the initial time T0 when the failures not yet occur, both of the front-left wheel brake mechanism 20 and the front-right wheel brake mechanism 22 (FR1, 2) brake the front-left/right wheels 12, 14 with predetermined braking force P1, and both of the rear-left wheel brake mechanism 24 and the rear-right wheel brake mechanism 26 (RR1, 2) brake the rear-left/right wheels 16, 18 with predetermined braking force P2 (<P1), where the braking force totals P3.

When the front-left wheel control unit 28 (ECU1) went into failure at time T1, the front-left wheel brake mechanism 20 (FR1) becomes inoperable, and the braking force of the front-left wheel brake mechanism 20 falls to zero.

In this case, the rear-left/right wheel control unit 32 reduces the braking force of the rear-right wheel brake mechanism 26 (RR2), and increases the braking force of the rear-left wheel brake mechanism 24 (RR1) . The front-right wheel control unit 30 increases the braking force of the front-right wheel brake mechanism 22 (FR2).

In other words, the braking force of the rear-right wheel brake mechanism 26 positioned diagonal to the defective front-left wheel brake mechanism 20 is reduced to stabilize the vehicle posture, and the braking force of the residual brake mechanisms 22, 24 is increased, to thereby reserve a sufficient level of total braking force.

Thereafter, when the front-right wheel control unit 30 (ECU2) went into failure at time T2, the front-right wheel brake mechanism 22 (FR2) becomes inoperable, and the braking force of the front-right wheel brake mechanism 22 falls to zero.

In this case, rear-left/right wheel control unit 32 elevates the braking force of the rear-right wheel brake mechanism 26 (RR2), having been lowered, so as to agree with the braking force of the rear-left wheel brake mechanism 24 (RR1). In this way, it now becomes possible to balance the braking force in the vehicle crosswise direction, and to reserve the braking force necessary for braking the vehicle by increasing the total braking force.

Note that, for the case where the front-right wheel control unit 30 went into failure first, and the front-left wheel control unit 28 went into failure next, it suffices to replace, in the description above, the term "front-left wheel control unit 28" with "front-right wheel control unit 30", and the term "front-left wheel brake mechanism 20" with "front-right wheel brake mechanism 22", respectively.

Next, an exemplary case where one of the front wheel control units (the front-left wheel control unit 28 or the front-right wheel control unit 30), and the rear-left/right wheel control unit 32 successively went into failure, illustrated in FIG. 7A, will be explained.

An exemplary case where the front-left wheel control unit 28 went into failure first, and the rear-left/right wheel control unit 32 went into failure next, illustrated in Referring to FIG. 7B, will be explained.

As illustrated in FIG. 7B, at the initial time T0 when the failures not yet occur, both of the front-left wheel brake mechanism 20 and the front-right wheel brake mechanism 22 (FR1, 2) brake the front-left/right wheels 12, 14 with predetermined braking force P1, and both of the rear-left wheel brake mechanism 24 and the rear-right wheel brake mechanisms 26 (RR1, 2) brake the rear-left/right wheels 16, 18 with predetermined braking force P2 (<P1), where the braking force totals P3.

When the front-left wheel control unit 28 (ECU1) went into failure at time T1, the front-left wheel brake mechanism 20 (FR1) becomes inoperable, and the braking force of the front-left wheel brake mechanism 20 falls to zero.

In this case, the rear-left/right wheel control unit 32 reduces the braking force of the rear-right wheel brake mechanism 26 (RR2), and increases the braking force of the rear-left wheel brake mechanism 24 (RR1). The front-right wheel control unit 30 increases the braking force of the front-right wheel brake mechanism 22 (FR2).

In other words, the braking force of the rear-right wheel brake mechanism 26 positioned diagonal to the defective front-left wheel brake mechanism 20 is reduced to stabilize the vehicle posture, and the braking force of the residual brake mechanisms 22, 24 is increased, to thereby reserve a sufficient level of total braking force.

Thereafter, when the rear-left/right wheel control unit 32 (ECU3) went into failure at time T2, the rear-left wheel brake mechanism 24 (RR1) and the rear-right wheel brake mechanism 26 (RR2) become inoperable, and the braking force of the rear wheel braking mechanisms 24, 26 falls to zero.

In this case, the front-right wheel control unit 30 zeros the braking force of the front-right wheel brake mechanism 22 (FR2) to stop braking of the front wheels 12, 14. This is for the purpose of preventing the vehicle posture from being off-balanced due to lateral unbalance of the braking force.

The parking control unit 38 then activates the parking brake mechanisms 34, 36 to brake the rear wheels 16, 18.

Although the braking force of the parking brake mechanisms 34, 36 is smaller than those of the rear-left wheel brake mechanism 24 and the rear-right wheel brake mechanism 26 that are service brakes, it can provide a certain level of braking force to the rear wheels 16, 18.

In other words, when either the front-left wheel control unit 28 or the front-right wheel control unit 30, and also the rear-left/right wheel control unit 32 went into failure, the other one of the front-left wheel control unit 28 and the front-right wheel control unit 30 reduces the braking force of the front wheel braking mechanism positioned opposite to such one defective control unit in the crosswise direction, and the parking control unit 38 activates the parking brake mechanisms 34, 36 to generate the braking force for the rear-left wheel 16 and the rear-right wheel 18.

Now, an exemplary case where the rear-left/right wheel control unit 32 went into failure first, and one of the front wheel control units (the front-left wheel control unit 28 of the front-right wheel control unit 30) went into failure next, will be explained.

In this case, as illustrated in FIG. 5B, upon failure of the rear-left/right wheel control unit 32, both of the front-left wheel control unit 28 and the front-right wheel control unit 30 increase the braking force of the front-left wheel brake mechanism 20 and the front-right wheel brake mechanism 22 (FR1, 2), respectively. The parking control unit 38 activates the parking brake mechanisms 34, 36 to brake the rear wheels 16, 18.

Thereafter, when either one of the front wheel control units went into failure, (the other) non-defective front wheel control unit zeros the braking force of the front wheel braking mechanism to be controlled, so as to allow only the parking brake mechanisms 34, 36 to perform braking.

In short, irrespective of the order of occurrence of failures, the final state will be same as illustrated in FIG. 7.

Now, there may be still other mode of failure such that the rear-left/right wheel control unit 32 and the parking control unit 38 go into failure. In this case, it suffices to increase the braking force of the brake mechanisms 20, 22 for the front-left/right wheels, by using the front-left wheel control unit 28 and the front-right wheel control unit 30.

As has been explained above, in the electric brake device 10 of the embodiment, four brake mechanisms 20, 22, 24, 26 can be controlled by three control units 28, 30, 32, posing an advantage of reducing the quantity of parts of the electric brake device 10 and reducing the vehicle cost.

According to the electric brake device 10, the control units 28, 30 are allocated one by one to the front-left wheel brake mechanism 20 and the front-right wheel brake mechanism 22, and a single control unit 32 is allocated to the left and right brake mechanisms 24, 26 for rear wheels, so that even if one control unit should go into failure, the residual brake mechanism for the front wheel remains controllable, posing an advantage of enhancing redundancy of the front wheel brake whose importance in braking is higher.

According to the electric brake device 10, when one wheel caused malfunction to disable braking, the braking force is reduced for a wheel positioned opposite to the defective wheel both in the front-rear direction and the crosswise direction, posing an advantage of balancing the braking force in the vehicle crosswise direction, and stabilizing the vehicle posture during braking.

According to the electric brake device 10, in case of braking malfunction at any two or more wheels, the braking force is controlled so as to be balanced between braking forces of the left and right front wheels, and between braking forces of the left and right rear wheels, posing an advantage of balancing the braking force in the vehicle crosswise direction, and stabilizing the vehicle posture during braking.

According to the electric brake device 10, when either the front-left wheel control unit 28 or the front-right wheel control unit 30 went into failure and became disabled for braking, the braking force of the rear wheel braking mechanism positioned opposite to the defective control unit in the crosswise direction is reduced, the braking force of the rear wheel braking mechanism positioned on the same side with the defective control unit in the crosswise direction is increased, and the braking force of the front wheel braking mechanism positioned opposite to the defective control unit in the crosswise direction is increased, posing an advantage of balancing the braking force in the vehicle crosswise direction and stabilizing the vehicle posture, and of achieving a braking force nearly equal to that before the failure.

According to the electric brake device 10, in case of failure of the rear-left/right wheel control unit 32, the braking force both of the front-left wheel brake mechanism 20 and the front-right wheel brake mechanism 22 are increased, posing an advantage of achieving a braking force nearly equal to that before the failure, while balancing the braking force in the vehicle crosswise direction.

According to the electric brake device 10, in case of failure of the rear-left/right wheel control unit 32, the parking brake mechanisms 34, 36 are further activated to generate the braking force for the rear-left wheel 16 and the rear-right wheel 18, so that a higher level of braking force may be obtained.

According to the electric brake device 10, in case of failure of the front-left wheel control unit 28 and the front-right wheel control unit 30, the braking force of both of the rear-left wheel brake mechanism 24 and the rear-right wheel brake mechanism 26 is increased, posing an advantage of obtaining a braking force nearly equal to that before the failure, while balancing the braking force in the vehicle crosswise direction.

According to the electric brake device 10, in case of failure of either the front-left wheel control unit 28 or the front-right wheel control unit 30, and also of the rear-left/right wheel control unit 32, the braking force of the front wheel braking mechanism positioned opposite to the defective control unit in the crosswise direction is reduced, and the braking force for the rear-left wheel and the rear-right wheel is generated by the parking brake mechanisms 34, 36, posing an advantage of balancing the braking force in the vehicle crosswise direction, and stabilizing the vehicle posture during braking.

According to the electric brake device 10, the individual brake mechanisms 20, 22, 24, 26 obtain the braking force by pressing the friction-applying member, while being powered by the electric actuator, against the friction-receiving member that rotates together with the wheel, posing an advantage of improving responsiveness to the brake operation as compared with the conventional hydraulic brake, and enabling various modes of brake operation adopted to the vehicle conditions.

According to the electric brake device 10, a disk brake system with a high heat radiation performance is built by employing a brake disk as the friction-receiving member, and a brake pad as the friction-applying member, posing an advantage of improving durability of the brake mechanism.

In the electric brake device 10, if the rear-left wheel brake mechanism 24 and the rear-right wheel brake mechanism 26 are designed to also function as the parking brake mechanisms 34, 36, the device will be advantageous in terms of reducing vehicle weight and simplifying vehicle configuration, as compared with the case where a dedicated parking brake mechanism is provided.

In the electric brake device 10, if an additional brake system is provided at the center of the brake disk to configure the parking brake mechanisms 34, 36, the device will be advantageous in terms of relieving the load of the individual brake mechanisms, as compared with the case where the rear-left wheel brake mechanism 24 and the rear-right wheel brake mechanism 26 also function as the parking brake mechanisms 34, 36.

The electric brake device 10 has two batteries for supplying power to the brake mechanisms 20, 22, 24, 26, so that if the main battery 40 should go into failure, the sub-battery 42 can activate the brake mechanisms 20, 22, 24, 26, posing an advantage of improving redundancy of the brake mechanisms 20, 22, 24, 26.

In the embodiment described above, although the definition was that the four wheels of vehicle include a first wheel pair composed of a first wheel and a second wheel arranged leaving a space in between in the width direction of vehicle, and a second wheel pair composed of a third wheel and a fourth wheel arranged leaving a space in between in the width direction, and arranged leaving a space from the first wheel pair in the length direction of vehicle, where the first wheel corresponds to the front-left wheel 12, the second wheel to the front-right wheel 14, the third wheel to the rear-left wheel 16, and the fourth wheel to the rear-right wheel 18, the definition may alternatively be such that the first wheel corresponds to the rear-left wheel 16, the second wheel to the rear-right wheel 18, the third wheel to the front-left wheel 12, and the fourth wheel to the front-right wheel 14.

In this case, the brake mechanisms 24, 26 for the rear-left/right wheels 16, 18 will be controlled independently by the respective control units (first control unit, second control unit), and the brake mechanisms 20, 22 for the front-left/right wheels 12, 14 will be controlled by a single control unit (third control unit).

### REFERENCE SIGNS LIST

10 electric brake device; 12 front-left wheel; 14 front-right wheel; 16 rear-left wheel; 18 rear-right wheel; 20 front-left wheel brake mechanism; 22 front-right wheel brake mechanism; 24 rear-left wheel brake mechanism; 26 rear-right wheel brake mechanism; 28 front-left wheel control unit; 30 front-right wheel control unit; 34, 36 parking brake mechanism; 38 parking control unit; 40 main battery; 42 backup battery; 50 vehicle control unit; 52 brake pedal; 54 parking brake operating unit

## Claims

1. An electric brake device (10) for a vehicle that has a first wheel pair (12, 14) composed of a first wheel and a second wheel arranged leaving a space in between in the width direction of the vehicle, and a second wheel pair (16, 18) composed of a third wheel and a fourth wheel arranged leaving a space in between in the width direction, and arranged leaving a space from the first wheel pair in the length direction of the vehicle,
the electric brake device comprising at least three control units:
a first control unit (28) that controls a first brake mechanism for braking the first wheel;
a second control unit (30) that controls a second brake mechanism for braking the second wheel; and
a third control unit (32) that controls a third brake mechanism for braking the third wheel, and a fourth brake mechanism for braking the fourth wheel,
a parking brake mechanism (34, 36) which applies braking force to each of the third wheel and the fourth wheel, and
a parking control unit (38) that controls the parking brake mechanism,
**characterized in that**, in case of failure of the third control unit, the parking control unit activating the parking brake mechanism to generate braking force for the third wheel and the fourth wheel, and wherein
in case of failure of either the first control unit or the second control unit, and also of the third control unit, the other one of the first control unit and the second control unit reduces braking force of the brake mechanism positioned opposite to such one control unit in the width direction, and the parking control unit activates the parking brake mechanism to generate braking force for the third wheel and the fourth wheel.

2. The electric brake device according to Claim 1, wherein, in case of braking malfunction at any one of the first wheel (12), the second wheel (14), the third wheel (16) and the fourth wheel (18), the control unit (28, 30, 32) reduces braking force for a wheel positioned opposite to the defective wheel both in the width direction and the length direction.

3. The electric brake device according to Claim 1 or 2, wherein, in case of braking malfunction at any two or more of the first wheel (12), the second wheel (14), the third wheel (16) and the fourth wheel (18), the control unit is configured to control braking force in such a manner that the braking forces of the first wheel and the second wheel are balanced, and the braking forces of the third wheel and the fourth wheel are balanced.

4. The electric brake device according to any one of Claims 1 to 3, wherein, in case of failure of either the first control unit (28) or the second control unit (30), the third control unit (32) reduces braking force of either the third brake mechanism or the fourth brake mechanism positioned opposite to such one control unit in the width direction, and increases braking force of either the third brake mechanism or the fourth brake mechanism positioned on the same side with such one control unit in the width direction; and the other one of the first control unit (28) and the second control unit (30) increases braking force of the brake mechanism positioned opposite to such one control unit in the width direction.

5. The electric brake device according to any one of Claims 1 to 4, wherein, in case of failure of the third control unit (32), the first control unit (28) and the second control unit increase braking force of the first brake mechanism (20) and the second brake mechanism (22), respectively.

6. The electric brake device according to any one of Claims 1 to 5, wherein, in case of failure of the first control unit (28) and the second control (30), the third control unit (32) individually increases braking force of the third brake mechanism and the fourth brake mechanism.

7. The electric brake device according to any one of Claims 1 to 6, wherein each of the brake mechanisms (20, 22, 24, 26) comprises a friction-receiving member that rotates together with the wheel; and a friction-applying member that moves while being powered by an electric actuator, and obtains the braking force by pressing the friction-applying member against the friction-receiving member.

8. The electric brake device according to Claim 7, wherein each of the brake mechanisms (20, 22, 24, 26) comprises a brake disk that rotates together with the wheel, and an electric caliper that has a brake pad movable between the pressing position and the non-pressing position relative to the brake disk by aid of the electric actuator.

9. The electric brake device according to Claim 8, wherein the third brake mechanism (24, 34) and the fourth brake mechanism (26, 36) also function as the parking brake mechanism, and the parking control unit (38) activates the parking brake by moving the brake pads of the third brake mechanism and the fourth brake mechanism to the pressing position relative to the brake disk.

10. The electric brake device according to Claim 8, wherein the parking brake mechanism (34, 36) comprises a brake drum that is provided in a hat positioned at the center of the brake disk of each of the third brake mechanism and the fourth brake mechanism, and is rotatable together with the wheel; and a brake shoe provided in each of the brake drums and movable between the pressing position and the non-pressing position relative to each brake drum by aid of an electric actuator for parking, and the parking control unit (38) activates the parking brake by moving the brake shoe of the parking brake mechanism to the pressing position relative to the brake drum.

11. The electric brake device according to Claim 8, wherein the parking brake mechanism (34, 36) comprises a brake drum that is provided in a hat positioned at the center of the brake disk of each of the third brake mechanism (24) and the fourth brake mechanism (26), and is rotatable together with the wheel; and a brake shoe provided in each of the brake drums and movable between the pressing position and the non-pressing position relative to each brake drum by aid of a linear motion electric actuator, and the parking control unit (38) activates the parking brake by moving the brake shoe of the parking brake mechanism (34, 36) to the pressing position relative to the brake drum.

12. The electric brake device according to any one of Claims 1 to 11, wherein each of the brake mechanisms (20, 22, 24, 26) is connected to a main battery and a backup battery that serve as power sources for controlling and activating the brake mechanisms, and, in case of main battery failure, the power source for each brake mechanism is switched to the backup battery.

13. The electric brake device according to any one of Claims 1 to 12,
wherein the first wheel (12) is the front-left wheel, the second wheel (14) is the front-right wheel, the third wheel (16) is the rear-left wheel, and the fourth wheel (18) is the rear-right wheel;
the first brake mechanism (20) is the front-left wheel brake mechanism, the second brake mechanism (22) is the front-right wheel brake mechanism, the third brake mechanism (24, 34) is the rear-left wheel brake mechanism, and the fourth brake mechanism (26, 36) is the rear-right wheel brake mechanism; and the first control unit (28) is the front-left wheel control unit, the second control unit (30) is the front-right wheel control unit, and the third control unit (32) is the rear-left/right wheel control unit.

## Patentansprüche

1. Elektrische Bremsvorrichtung (10) für ein Fahrzeug, aufweisend ein erstes Radpaar (12, 14) mit einem ersten Rad und einem zweiten Rad, die so angeordnet sind, dass sie einen Zwischenraum in Breitenrichtung des Fahrzeugs lassen, und ein zweites Radpaar (16, 18) mit einem dritten Rad und einem vierten Rad, die so angeordnet sind, dass sie einen Zwischenraum in Breitenrichtung des Fahrzeugs lassen und dass sie einen Zwischenraum zum ersten Radpaar in Längsrichtung des Fahrzeugs lassen,
wobei die elektrische Bremsvorrichtung mindestens drei Steuereinheiten aufweist:
eine erste Steuereinheit (28), die einen ersten Bremsmechanismus zum Bremsen des ersten Rades steuert;
eine zweite Steuereinheit (30), die einen zweiten Bremsmechanismus zum Bremsen des zweiten Rades steuert;
eine dritte Steuereinheit (32), die einen dritten Bremsmechanismus zum Bremsen des dritten Rades und einen vierten Bremsmechanismus zum Bremsen des vierten Rades steuert,
einen Parkbremsmechanismus (34, 36), der Bremskraft sowohl auf das dritte Rad als auch auf das vierte Rad ausübt, und
eine Parksteuereinheit (38), die den Parkbremsmechanismus steuert,
**dadurch gekennzeichnet, dass**
bei Ausfall der dritten Steuereinheit die Parksteuereinheit den Parkbremsmechanismus aktiviert, um Bremskraft für das dritte Rad und das vierte Rad zu erzeugen, und wobei
bei Ausfall entweder der ersten Steuereinheit oder der zweiten Steuereinheit und auch der dritten Steuereinheit die jeweils andere der ersten und zweiten Steuereinheit die Bremskraft des einer solchen Steuereinheit in Breitenrichtung gegenüber positionierten Bremsmechanismus reduziert und die Parksteuereinheit den Parkbremsmechanismus aktiviert, um Bremskraft für das dritte Rad und das vierte Rad zu erzeugen.

2. Elektrische Bremsvorrichtung nach Anspruch 1, wobei die Steuereinheit (28, 30, 32) bei einer Bremsfehlfunktion an irgend einem der Räder, dem ersten Rad (12) oder dem zweiten Rad (14) oder dem dritten Rad (16) oder dem vierten Rad (18), die Bremskraft für ein sowohl in Breitenrichtung als auch in Längsrichtung gegenüber dem defekten Rad positioniertes Rad reduziert.

3. Elektrische Bremsvorrichtung nach Anspruch 1 oder 2, wobei die Steuereinheit bei einer Bremsfehlfunktion an beliebigen zwei oder mehreren aus dem ersten Rad (12), dem zweiten Rad (14), dem dritten Rad (16) und dem vierten Rad (18), derart zum Steuern der Bremskraft konfiguriert ist, dass die Bremskräfte des ersten und des zweiten Rades ausgeglichen sind und die Bremskräfte des dritten und des vierten Rades ausgeglichen sind.

4. Elektrische Bremsvorrichtung nach einem der Ansprüche 1 bis 3, wobei die dritte Steuereinheit (32) bei Ausfall entweder der ersten Steuereinheit (28) oder der zweiten Steuereinheit (30) die Bremskraft entweder des dritten Bremsmechanismus oder des vierten Bremsmechanismus reduziert, der in Breitenrichtung gegenüber jener einer Steuereinheit positioniert ist, und die Bremskraft entweder des dritten Bremsmechanismus oder des vierten Bremsmechanismus verstärkt, der in Breitenrichtung auf der gleichen Seite jener einer Steuereinheit positioniert ist; wobei die jeweils andere der ersten Steuereinheit (28) und der zweiten Steuereinheit (30) die Bremskraft des Bremsmechanismus verstärkt, der in Breitenrichtung jener einer Steuereinheit gegenüber positioniert ist.

5. Elektrische Bremsvorrichtung nach einem der Ansprüche 1 bis 4, wobei die erste Steuereinheit (28) und die zweite Steuereinheit bei Ausfall der dritten Steuereinheit (32) die Bremskraft des ersten Bremsmechanismus (20) und des zweiten Bremsmechanismus (22) entsprechend verstärken.

6. Elektrische Bremsvorrichtung nach einem der Ansprüche 1 bis 5,
wobei die dritte Steuereinheit (32) bei Ausfall der ersten Steuereinheit (28) und der zweiten Steuereinheit (30) die Bremskraft des dritten Bremsmechanismus und des vierten Bremsmechanismus einzeln verstärkt.

7. Elektrische Bremsvorrichtung nach einem der Ansprüche 1 bis 6,
wobei jeder der Bremsmechanismen (20, 22, 24, 26) ein Reibung aufnehmendes Element, das sich zusammen mit dem Rad dreht, und ein Reibung ausübendes Element aufweist, das sich angetrieben von einer elektrischen Betätigungsvorrichtung bewegt und die Bremskraft durch Drücken des Reibung ausübenden Elements gegen das Reibung aufnehmende Element erhält.

8. Elektrische Bremsvorrichtung nach Anspruch 7,
wobei jeder der Bremsmechanismen (20, 22, 24, 26) eine Bremsscheibe, die sich zusammen mit dem Rad dreht, und einen elektrischen Sattel aufweist, der einen Bremsklotz umfasst, der sich mit Hilfe der elektrischen Betätigungsvorrichtung zwischen einer Andrückstellung und einer Nichtandrückstellung gegenüber der Bremsscheibe bewegen lässt.

9. Elektrische Bremsvorrichtung nach Anspruch 8,
wobei der dritte Bremsmechanismus (24, 34) und der vierte Bremsmechanismus (26, 36) auch als Parkbremsmechanismus fungieren und
die Parksteuereinheit (38) die Parkbremse aktiviert, indem sie die Bremsklötze des dritten Bremsmechanismus und des vierten Bremsmechanismus gegenüber der Bremsscheibe in die Andrückstellung bewegt.

10. Elektrische Bremsvorrichtung nach Anspruch 8,
wobei der Parkbremsmechanismus (34, 36) eine Bremstrommel aufweist, die an einer in der Mitte der Bremsscheibe sowohl des dritten Bremsmechanismus als auch des vierten Bremsmechanismus positionierten Kappe vorgesehen ist und gemeinsam mit dem Rad drehbar ist; und eine Bremsbacke aufweist, die in jeder der Bremstrommeln vorgesehen ist und mit Hilfe einer elektrischen Betätigungsvorrichtung zum Parken zwischen der Andrückstellung und der Nichtandrückstellung gegenüber der Bremstrommel bewegt werden kann, und
die Parksteuereinheit (38) die Parkbremse durch Bewegen der Bremsbacke des Parkbremsmechanismus in die Andrückstellung gegenüber der Bremstrommel aktiviert.

11. Elektrische Bremsvorrichtung nach Anspruch 8,
wobei der Parkbremsmechanismus (34, 36) eine Bremstrommel aufweist, die an einer in der Mitte der Bremsscheibe sowohl des dritten Bremsmechanismus (24) als auch des vierten Bremsmechanismus (26) positionierten Kappe vorgesehen ist und gemeinsam mit dem Rad drehbar ist; und eine Bremsbacke aufweist, die in jeder der Bremstrommeln vorgesehen ist und mit Hilfe einer elektrischen Betätigungsvorrichtung für lineare Bewegung zwischen der Andrückstellung und der Nichtandrückstellung gegenüber der Bremstrommel bewegt werden kann, und
die Parksteuereinheit (38) die Parkbremse aktiviert, indem sie die Bremsbacke des Parkbremsmechanismus (34, 36) gegenüber der Bremstrommel in die Andrückstellung bewegt.

12. Elektrische Bremsvorrichtung nach einem der Ansprüche 1 bis 11,
wobei jeder der Bremsmechanismen (20, 22, 24, 26) mit einer Hauptbatterie und einer Reservebatterie verbunden ist, die als Stromquellen zum Steuern und Aktivieren der Bremsmechanismen dienen, und bei Ausfall der Hauptbatterie die Stromversorgung für die einzelnen Bremsmechanismen auf die Reservebatterie umgeschaltet wird.

13. Elektrische Bremsvorrichtung nach einem der Ansprüche 1 bis 12,
wobei das erste Rad (12) das linke Vorderrad, das zweite Rad (14) das rechte Vorderrad, das dritte Rad (16) das linke Hinterrad und das vierte Rad (18) das rechte Hinterrad ist;
der erste Bremsmechanismus (20) der Bremsmechanismus für das linke Vorderrad, der zweite Bremsmechanismus (22) der Bremsmechanismus für das rechte Vorderrad, der dritte Bremsmechanismus (24, 34) der Bremsmechanismus für das linke Hinterrad und der vierte Bremsmechanismus (26, 36) der Bremsmechanismus für das rechte Hinterrad ist; und
die erste Steuereinheit (28) die Steuereinheit für das linke Vorderrad, die zweite Steuereinheit (30) die Steuereinheit für das rechte Vorderrad und die dritte Steuereinheit (32) die Steuereinheit für das linke/rechte Hinterrad ist.

## Revendications

1. Dispositif de frein électrique (10) pour un véhicule qui comporte une première paire de roues (12, 14) qui est constituée par une première roue et une deuxième roue qui sont agencées en laissant un espace entre elles dans la direction de largeur du véhicule, et une seconde paire de roues (16, 18) qui est constituée par une troisième roue et une quatrième roue qui sont agencées en laissant un espace entre elles dans la direction de largeur du véhicule, et qui est agencée en laissant un espace par rapport à la première paire de roues dans la direction de longueur du véhicule,
le dispositif de frein électrique comprenant au moins trois unités de commande :
une première unité de commande (28) qui commande un premier mécanisme de frein pour freiner la première roue ;
une deuxième unité de commande (30) qui commande un deuxième mécanisme de frein pour freiner la deuxième roue ; et
une troisième unité de commande (32) qui commande un troisième mécanisme de frein pour freiner la troisième roue, et un quatrième mécanisme de frein pour freiner la quatrième roue ;
un mécanisme de frein de parcage (34, 36) qui applique une force de freinage sur chaque roue prise parmi la troisième roue et la quatrième roue ; et
une unité de commande de parcage (38) qui commande le mécanisme de frein de parcage ;
**caractérisé en ce que** :
dans le cas d'une défaillance de la troisième unité de commande, l'unité de commande de parcage active le mécanisme de frein de parcage afin de générer une force de freinage pour la troisième roue et la quatrième roue ; et dans lequel :
dans le cas d'une défaillance de soit la première unité de commande, soit la deuxième unité de commande et également de la troisième unité de commande, l'autre unité de commande prise parmi la première unité de commande et la deuxième unité de commande réduit la force de freinage du mécanisme de freinage qui est positionné à l'opposé de l'unité de commande en question dans la direction de largeur, et l'unité de commande de parcage active le mécanisme de frein de parcage afin de générer une force de freinage pour la troisième roue et la quatrième roue.

2. Dispositif de frein électrique selon la revendication 1, dans lequel, dans le cas d'un dysfonctionnement de freinage au niveau d'une quelconque roue prise parmi la première roue (12), la deuxième roue (14), la troisième roue (16) et la quatrième roue (18), l'unité de commande (28, 30, 32) réduit la force de freinage pour une roue qui est positionnée à l'opposé de la roue défectueuse à la fois dans la direction de largeur et dans la direction de longueur.

3. Dispositif de frein électrique selon la revendication 1 ou 2, dans lequel, dans le cas d'un dysfonctionnement de freinage au niveau de deux quelconques roues ou plus prises parmi la première roue (12), la deuxième roue (14), la troisième roue (16) et la quatrième roue (18), l'unité de commande est configurée pour commander la force de freinage de telle sorte que les forces de freinage de la première roue et de la deuxième roue soient équilibrées et que les forces de freinage de la troisième roue et de la quatrième roue soient équilibrées.

4. Dispositif de frein électrique selon l'une quelconque des revendications 1 à 3, dans lequel, dans le cas d'une défaillance de soit la première unité de commande (28), soit la deuxième unité de commande (30), la troisième unité de commande (32) réduit la force de freinage de soit le troisième mécanisme de frein, soit le quatrième mécanisme de frein qui est positionné à l'opposé de l'unité de commande en question dans la direction de largeur et augmente la force de freinage de soit le troisième mécanisme de frein, soit le quatrième mécanisme de frein qui est positionné sur le même côté que l'unité de commande en question dans la direction de largeur, et l'autre unité de commande prise parmi la première unité de commande (28) et la deuxième unité de commande (30) augmente la force de freinage du mécanisme de frein qui est positionné à l'opposé de l'unité de commande en question dans la direction de largeur.

5. Dispositif de frein électrique selon l'une quelconque des revendications 1 à 4, dans lequel, dans le cas d'une défaillance de la troisième unité de commande (32), la première unité de commande (28) et la deuxième unité de commande augmentent respectivement la force de freinage du premier mécanisme de frein (20) et du deuxième mécanisme de frein (22).

6. Dispositif de frein électrique selon l'une quelconque des revendications 1 à 5, dans lequel, dans le cas d'une défaillance de la première unité de commande (28) et de la deuxième unité de commande (30), la troisième unité de commande (32) augmente de façon individuelle la force de freinage du troisième mécanisme de frein et du quatrième mécanisme de frein.

7. Dispositif de frein électrique selon l'une quelconque des revendications 1 à 6, dans lequel chacun des mécanismes de frein (20, 22, 24, 26) comprend un élément de réception de friction qui est entraîné en rotation en association avec la roue ; et un élément d'application de friction qui est déplacé tandis qu'il est alimenté par un actionneur électrique, et obtient la force de freinage par pression de l'élément d'application de friction contre l'élément de réception de friction.

8. Dispositif de frein électrique selon la revendication 7, dans lequel chacun des mécanismes de frein (20, 22, 24, 26) comprend un disque de frein qui est entraîné en rotation avec la roue, et un étrier électrique qui comporte un patin de frein qui peut être déplacé entre la position de pression et la position de non pression par rapport au disque de frein à l'aide de l'actionneur électrique.

9. Dispositif de frein électrique selon la revendication 8, dans lequel le troisième mécanisme de frein (24, 34) et le quatrième mécanisme de frein (26, 36) fonctionnent également en tant que mécanisme de frein de parcage, et l'unité de commande de parcage (38) active le frein de parcage en déplaçant les patins de frein du troisième mécanisme de frein et du quatrième mécanisme de frein jusqu'à la position de pression par rapport au disque de frein.

10. Dispositif de frein électrique selon la revendication 8, dans lequel le mécanisme de frein de parcage (34, 36) comprend un tambour de frein qui est prévu dans une coiffe qui est positionnée au niveau du centre du disque de frein de chaque mécanisme de frein pris parmi le troisième mécanisme de frein et le quatrième mécanisme de frein, et peut être entraîné en rotation en association avec la roue ; et un sabot de frein qui est prévu dans chacun des tambours de frein et qui peut être déplacé entre la position de pression et la position de non pression par rapport à chaque tambour de frein à l'aide d'un actionneur électrique pour le parcage, et l'unité de commande de parcage (38) active le frein de parcage en déplaçant le sabot de frein du mécanisme de frein de parcage jusqu'à la position de pression par rapport au tambour de frein.

11. Dispositif de frein électrique selon la revendication 8, dans lequel le mécanisme de frein de parcage (34, 36) comprend un tambour de frein qui est prévu dans une coiffe qui est positionnée au niveau du centre du disque de frein de chaque mécanisme de frein pris parmi le troisième mécanisme de frein (24) et le quatrième mécanisme de frein (26), et peut être entraîné en rotation avec la roue ; et un sabot de frein qui est prévu dans chacun des tambours de frein et qui peut être déplacé entre la position de pression et la position de non pression par rapport à chaque tambour de frein à l'aide d'un actionneur électrique à déplacement linéaire, et l'unité de commande de parcage (38) active le frein de parcage en déplaçant le sabot de frein du mécanisme de frein de parcage (34, 36) jusqu'à la position de pression par rapport au tambour de frein.

12. Dispositif de frein électrique selon l'une quelconque des revendications 1 à 11,
dans lequel chacun des mécanismes de frein (20, 22, 24, 26) est connecté à une batterie principale et à une batterie de secours qui jouent le rôle de sources de puissance pour commander et activer les mécanismes de frein et, dans le cas d'une défaillance de la batterie principale, la source de puissance pour chaque mécanisme de frein est commutée sur la batterie de secours.

13. Dispositif de frein électrique selon l'une quelconque des revendications 1 à 12, dans lequel :
la première roue (12) est la roue avant gauche, la deuxième roue (14) est la roue avant droite, la troisième roue (16) est la roue arrière gauche et la quatrième roue (18) est la roue arrière droite ;
le premier mécanisme de frein (20) est le mécanisme de frein de roue avant gauche, le deuxième mécanisme de frein (22) est le mécanisme de frein de roue avant droite, le troisième mécanisme de frein (24, 34) est le mécanisme de frein de roue arrière gauche et le quatrième mécanisme de frein (26, 36) est le mécanisme de frein de roue arrière droite ; et
la première unité de commande (28) est l'unité de commande de roue avant gauche, la deuxième unité de commande (30) est l'unité de commande de roue avant droite et la troisième unité de commande (32) est l'unité de commande de roue arrière gauche/droite.
